# EUROPÄISCHE PATENTSCHRIFT

(11) **EP 0 613 612 B1**
(45) Veröffentlichungstag und Bekanntmachung des Hinweises auf die Patenterteilung: **27.11.1996**
(21) Anmeldenummer: 94103013.2
(22) Anmeldetag: 01.03.1994
(51) Int. Cl.: A01B 63/32, A01D 33/14

(54) **Landwirtschaftliche Maschine, insbesondere Rübenerntemaschine**
Agricultural machine, in particular a beet harvester
Machine agricole, en particulier récolteuse de betteraves

(30) Priorität: 05.03.1993 DE 4306834
(43) Veröffentlichungstag der Anmeldung: 07.09.1994
(73) Patentinhaber: Franz Kleine Maschinenfabrik GmbH & Co., D-33154 Salzkotten (DE)
(72) Erfinder: Lühs, Herbert, D-33142 Büren-Brenken (DE)
(74) Vertreter: Rehberg, Elmar, Dipl.-Ing.

(56) Entgegenhaltungen:
- EP-A- 0 171 719
- DE-A- 3 133 089
- DE-A- 3 935 768
- PATENT ABSTRACTS OF JAPAN vol. 8, no. 242 (P-311)7. November 1984 & JP-A-59 116 008 (KUBOTA TEKKO KK) 4. Juli 1984

## Beschreibung

Die Erfindung bezieht sich auf eine landwirtschaftliche Maschine, insbesondere Rübenerntemaschine, mit den in Oberbegriff des Anspruches 1 angegebenen Merkmalen. Es soll beispielsweise der Bodenabstand der Ultraschalleinrichtung festgestellt und ausgehend von dem dabei gewonnenen Meßergebnis die Wirkhöhe der Köpf- und/oder Rodeeinrichtung an einer Rübenerntemaschine eingesteuert bzw. eingeregelt werden. Die Erfindung kann aber auch bei jeder anderen landwirtschaftlichen Maschine angewendet werden, bei der es darum geht, die Wirkhöhe eines Arbeitsgerätes oberhalb oder unterhalb des Bodens in einer bestimmten Höhenlage relativ zum Boden zur Einwirkung zu bringen.

Eine landwirtschaftliche Maschine der eingangs beschriebenen Art ist aus der DE-OS 36 27 015 bekannt. Dabei werden auch mehrere Ultraschalleinrichtungen quer zur Fahrtrichtung versetzt angeordnet, deren Signale gemeinsam bestimmend für eine Steuer- oder Regeleinrichtung sind und die gleiche Grundeinstellung aufweisen. Die Wirkhöhe eines Arbeitsgerätes wird nach dem arithmetischen Mittelwert der Höhen eingestellt, die von den einzelnen Ultraschalleinrichtungen gemessen werden. Zusätzlich wird eine Differenz der gemessenen Höhen einer rechts und einer links an der Maschine angeordneten Ultraschalleinrichtung gebildet und in Abhängigkeit davon eine Verkantung des Arbeitsgerätes ggfs. korrigiert. Die angewendete Mittelwertbildung hat den Nachteil, daß jede Bodenunebenheit in die Mittelwertbildung eingeht, z. B. auch solche Bodenunebenheiten, bei denen der Boden sich nicht in der durch die Vorbereitung des Bodens hervorgerufenen Höhenlage befindet, sondern außerhalb derselben. Wird z. B. der Boden durch nachfolgende Pflegearbeiten bereichsmäßig verdichtet, wobei Pflegespuren entstehen, wird die Mittelwertbildung entsprechend verfälscht. Die Einbeziehung von Pflegespuren, die in ihrem Entstehen oft unvermeidlich sind, in eine Mittelwertbildung ist nicht vorteilhaft, weil hierdurch falsche Ergebnisse entstehen.

Solche Pflegespuren entstehen beispielsweise durch Düngerstreuer oder infolge einer Spritzmittelausbringung. Dabei wird selbstverständlich versucht, immer wieder in der gleichen Spur zu fahren. Was manchmal gelingt, manchmal jedoch nicht. Die Pflegespuren können gegenüber den benachbarten Bodenbereichen eine Tiefe bis etwa 10 cm und sogar noch darüber aufweisen. Rübenerntemaschinen sind im allgemeinen nicht so konstruiert, daß sie selbst ebenfalls in den Pflegespuren fahren könnten. Wenn eine Rübenerntemaschine den Bodenabstand nur an einer Stelle abtastet, so kann dies entweder im unveränderten Bodenbereich geschehen, wobei ein zutreffendes Ergebnis entsteht, oder aber im Bereich einer Pflegespur, so daß dann ein falsches Ergebnis entsteht.

Bei zweireihig arbeitenden Rübenerntemaschinen ist es bekannt, drei Tasträder auf dem Boden abrollen zu lassen, die einen Waagebalken beeinflussen. Wenn jedoch eines der Tasträder z. B. in eine Pflegespur gerät, dann erhöht sich der Druck auf die beiden anderen Tasträder, und diese sinken tiefer ein. Es wird dann hier auch eine Art Mittelwertbildung herbeigeführt, in die die verfälschende Wirkung von Pflegespuren eingeht. Darüberhinaus besitzt die mit den drei Tasträdern und dem Waagebalken arbeitende Einrichtung mechanische Ungenauigkeiten. Der Einfluß der Pflegespuren wird zwar gemindert, aber nicht gänzlich ausgeschlossen.

Aus der DE-OS 22 46 269 ist eine Erntemaschine, insbesondere Mähdrescher, mit einem gegenüber dem Boden hydraulisch höhenverstellbaren Mähtisch bekannt. Als Tasteinrichtung ist eine drehbar gelagerte Achse vorgesehen, auf der mehrere Tastfinger befestigt sind, die den Boden abtasten sollen. Bei Bodenunebenheiten wird jedoch nur ein oder vielleicht auch zwei Tastfinger auf den Boden aufliegen, so daS sich der gesamte Rückstelldruck der Achse auf diesen einen oder diese zwei Tastfinger erstreckt und diese vergleichsweise tiefer in den Boden einsinken werden. Die nicht mit dem Boden in Berührung befindlichen Tastfinger geben kein Signal ab. Die Beeinflussung der Wirkhöhe des Arbeitsgerätes richtet sich immer nach dem oder den aufliegenden Tastfingern. Es wird auch hier eine Art Mittelwertbildung herbeigeführt.

Der Erfindung liegt die Aufgabe zugrunde, eine landwirtschaftliche Maschine der eingangs beschriebenen Art bereitzustellen, bei der der nachteilige Einfluß von Pflegespuren auf die Abstandsmessung ausgeschaltet ist.

Erfindungsgemäß wird dies bei der landwirtschaftlichen Maschine der eingangs beschriebenen Art dadurch erreicht, daß die Auswerteschaltung so abgestimmt ist, daß die Wirkhöhe des Arbeitsgerätes nur dann erniedrigt wird, wenn alle Ultraschalleinrichtungen je ein die Erniedrigung verlangendes Signal abgeben, während die Wirkhöhe des Arbeitsgerätes bereits dann erhöht wird, wenn auch nur eine Ultraschalleinrichtung ein die Erhöhung verlangendes Signal abgibt.

Die Erfindung geht von dem Gedanken aus, den verfälschenden Einfluß von Pflegespuren auszuschalten. Zu diesem Zweck ist die Auswerteschaltung so ausgebildet, daß die Wirkhöhe des Arbeitsgerätes nach dem höchsten Signal ausgerichtet wird, ohne daß dies durch auftretende Pflegespuren beeinträchtigt oder verändert wird. Zu einem tieferen Einsinken von Tastfingern kommt es nicht. Die Ultraschalleinrichtungen geben kontinuierlich ihre Signale ab. Zum Absenken der Wirkhöhe des Arbeitsgerätes ist es erforderlich, daß alle Ultraschalleinrichtungen ein die Erniedrigung verlangendes Signal abgeben. Wenn zwei Ultraschalleinrichtungen quer zur Fahrtrichtung versetzt nebeneinander vorgesehen sind, wird in der Regel allenfalls eine der Ultraschalleinrichtungen sich im Bereich einer Pflegespur befinden, so daß davon auszugehen ist, daß die Ultraschalleinrichtung die Wirkhöhe des Arbeitsgerätes bestimmt, die sich nicht im Bereich einer Pflegespur befindet. Eine größere Sicherheit ergibt sich dann, wenn beispielsweise drei Ultraschalleinrichtungen quer zur Fahrtrichtung versetzt vorgesehen sind, was an sich nur einen geringfügigen Mehraufwand bedeutet. Es werden dann selbst solche Fälle ausgeregelt, bei denen sich zwei Ultraschalleinrichtungen jeweils im Bereich je einer Pflegespur befinden. Es ist nicht davon auszugehen, daß sämtliche drei Ultraschalleinrichtungen jeweils in einer Pflegespur arbeiten. Die Erfindung bringt den Vorteil mit sich, daß Hindernisse, wie Steine, die aus dem Boden nach oben vorragen, zu einer sofortigen Erhöhung der Wirkhöhe des Arbeitsgerätes führen und insoweit auch einen Schutz des Arbeitsgerätes herbeiführen. Da ein solches Hindernis wie ein Stein aber auch schnell überfahren wird, wird sich häufig eine Nachfolgesituation ergeben, bei der sämtliche Ultraschalleinrichtungen ein die Erniedrigung verlangendes Signal abgeben, so daß das Arbeitsgerät relativ schnell wieder auf eine zutreffende Wirkhöhe abgesenkt wird, nachdem der Stein überfahren ist.

Die Ultraschalleinrichtungen müssen die gleiche Grundeinstellung aufweisen, d. h. die Übergangspunkte zwischen einem die Erhöhung verlangenden Signal und einem die Erniedrigung verlangenden Signal müssen in gleicher Weise festgelegt sein. Damit werden zugleich Zwitterstellungen vermieden.

Jede Ultraschalleinrichtung kann zur Abgabe eines die Erhöhung der Wirkhöhe verlangenden ersten Signals, eines die Erniedrigung der Wirkhöhe verlangenden zweiten Signals und eines die Wirkhöhe konstant haltenden dritten Signals ausgebildet sein. Das dritte Signal kann auch so definiert sein, daß kein Signal an die Auswerteschaltung abgegeben wird. Die Bandbreite, in denen die einzelnen Signale auftreten, kann einstellbar ausgebildet sein. Auch dabei ist es wichtig, die Ultraschalleinrichtungen jeweils aufeinander abgestimmt gleich einzustellen.

Alle Ultraschalleinrichtungen können in derselben, durch Laufräder festgelegten Horizontalebene angeordnet sein. Die Ultraschalleinrichtungen weisen dann zu dieser Horizontalebene einen jeweils übereinstimmenden Abstand auf. Die Anordnung der Ultraschalleinrichtungen in unterschiedlichen Höhenlagen empfiehlt sich meist nicht, obwohl sie grundsätzlich möglich wäre. Der Steuer- und Regelaufwand erhöht sich jedoch durch eine solche Maßnahme.

Die Anordnung der Ultraschalleinrichtungen bei einer Rübenerntemaschine kann so getroffen sein, daß je eine Ultraschalleinrichtung zwischen zwei benachbarten Rübenreihen angeordnet ist. Insbesondere bei mehrreihigen Rübenerntemaschinen ist es auch möglich, eine breitere Abtastbasis zu schaffen und zwischen einzelnen Rübenreihen bewußt auf die Anordnung einer Ultraschalleinrichtung zu verzichten. Insgesamt müssen aber auch dabei mindestens zwei Ultraschalleinrichtungen vorgesehen sein.

Sinnvoller und sicherer wird die Bestimmung des Bodenabstandes jedoch dann, wenn drei oder mehr Ultraschalleinrichtungen vorgesehen sind. Der Ausnahmefall, daß jede der vorhandenen Ultraschalleinrichtungen dann in je einer Pflegespur mißt, ist sehr unwahrscheinlich.

Die Ultraschalleinrichtungen können insbesondere rechtwinklig zur Fahrtrichtung ausgerichtet an der landwirtschaftlichen Maschine angeordnet sein. Der Bodenabstand wird dann über eine relativ kleine Querstrecke bestimmt.

Das Arbeitsgerät kann ein- oder mehrreihig ausgebildet sein und senkrecht zu einer durch die Laufräder festgelegten Ebene geführt sein. Es können auch mehrere Arbeitsgeräte gemeinsam in ihrer Wirkhöhe ausgesteuert werden.

Jede Ultraschalleinrichtung kann von je einem Reflexionsrohr umgeben sein, das auf die Bodenoberfläche ausgerichtet angeordnet ist. Dieses Reflexionsrohr dient zur Verstärkung und Mitteilung der zu empfangenden Signale. Es erfüllt zugleich eine Schutzfunktion und wirkt einer Verschmutzungsgefahr des Senders und Empfängers entgegen. Beim Fahren durch einen Rübenbestand übt das Reflexionsrohr zugleich auch eine gewisse Zerteilungswirkung im Bereich des Blattwerkes der Rüben aus.

Die Steuer- oder Regeleinrichtung kann eine eine Mehrzahl von Regelventilen aufweisende hydraulische Schaltung aufweisen, die einerseits zum schnellen Heben und Senken und andererseits zum vergleichsweise langsamen automatischen Anpassen der Wirkhöhe ausgebildet ist. Dabei ist es möglich, z. B. am Anfang eines Feldes aus einer Transporthöhe heraus schnell in eine Anfangswirkhöhe abzusenken. Eine solche Steuerung kann vom Schlepper aus betätigt werden. Ist diese gewollte Anfangswirkhöhe erreicht, wird auf automatisches Arbeiten umgeschaltet, so daß dann die Ultraschalleinrichtungen unmittelbar die Steuerung übernehmen.

Der Bereich des Auftretens des dritten Signals kann an allen Ultraschalleinrichtungen gemeinsam festlegbar und gemeinsam verstellbar sein. Damit läßt sich die Empfindlichkeit beeinflussen bzw. festlegen.

Die Erfindung wird anhand eines bevorzugten Ausführungsbeispiels weiter erläutert und beschrieben. Es zeigen:
- Figur 1: eine schematisierte Darstellung von drei Ultraschalleinrichtungen in einer Schnittansicht quer zur Fahrtrichtung und
- Figur 2: den hydraulischen Schaltplan einer Steuer- oder Regeleinrichtung.

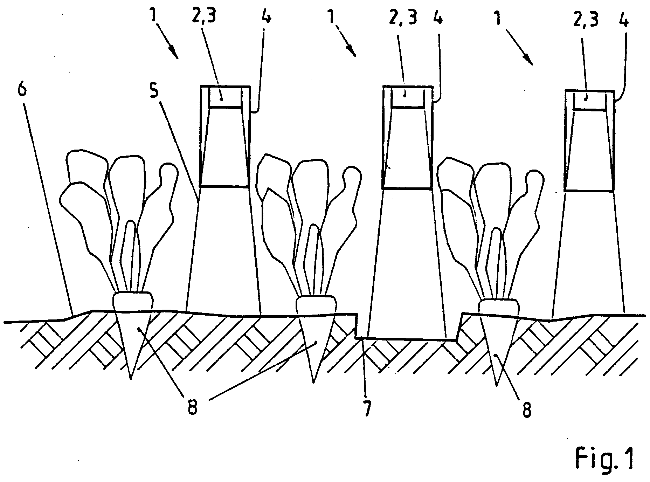

In Figur 1 sind drei Ultraschalleinrichtungen 1 schematisch dargestellt. Diese sitzen quer zur Fahrtrichtung der landwirtschaftlichen Maschine in gleicher Höhe beispielsweise am Rahmen dieser Maschine. Jede Ultraschalleinrichtung 1 weist eine Einheit aus Sender 2 und Empfänger 3 auf, die jeweils in einem Reflexionsrohr 4 untergebracht sind. Es könnte auch ein Sender 2 jeweils neben einem Empfänger 3 angeordnet sein. Die gegenseitige Abstimmung ist so getroffen, daß sich eine Schallkeule 5 bildet, die nach unten gerichtet ist und die die Aussendung der Schallwellen vom Sender 2 wiedergibt. Es ist ein Bodenprofil 6 dargestellt, welches leicht erhöhte und leicht vertiefte Stellen und Übergänge aufweisen kann. Das Bodenprofil 6 wird jedoch sprunghaft von einer Pflegespur 7 gestört, die bei einer notwendigen Zwischenarbeit vor der Ernte der Rüben 8 zwischen zwei benachbarten Rübenreihen hinterlassen wurde. Die mittlere dargestellte Ultraschalleinrichtung 1 wird somit exakt im Bereich dieser Pflegespur 7 den Bodenabstand ermitteln, während die beiden äußeren Ultraschalleinrichtungen 1 das Bodenprofil 6 korrekt abtasten.

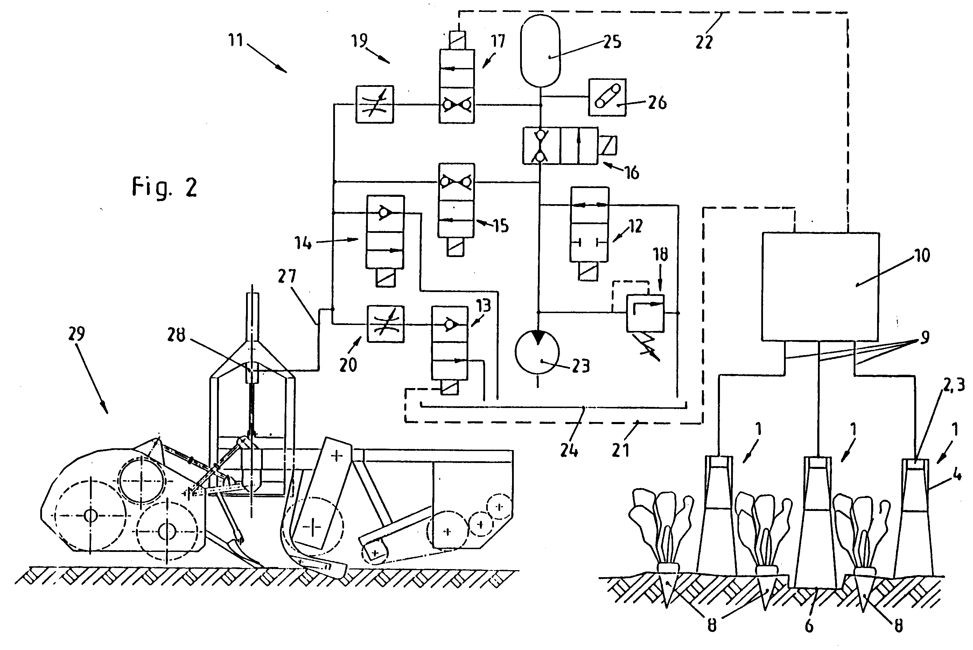

In Figur 2 sind die drei Ultraschalleinrichtungen 1 noch einmal verkleinert dargestellt. Von jeder Ultraschalleinrichtung führt je eine Leitung 9 zu einer nachgeordneten Auswerteschaltung 10, die im wesentlichen elektronisch ausgebildet ist.

Der Auswerteschaltung 10 ist eine hydraulische Schaltung 11 nachgeordnet. Die hydraulische Schaltung 11 weist eine Reihe von magnetisch steuerbaren Wegeventilen 12 bis 17 auf. Weiterhin ist in der Schaltung 11 ein Überströmventil 18 sowie zwei einstellbare Drosselventile 19 und 20 vorgesehen, die in der dargestellten Weise durch hydraulische Leitungen, die in durchgezogener Linienführung dargestellt sind, miteinander verbunden sind. Von der Auswerteschaltung 10 führt jeweils eine elektrische Leitung zu jedem der Wegeventile 12 bis 17, wobei hier der Einfachheit halber nur zwei elektrische Leitungen 21 und 22 dargestellt sind, die zu den Wegeventilen 13 bzw. 17 führen. In der Schaltung 11 ist weiterhin eine Pumpe 23, ein Tank 24 zur Aufnahme der rückgeführten Hydraulikflüssigkeit, ein Druckspeicher 25 und ein Druckschalter 26 vorgesehen. Von der Schaltung 11 führt eine hydraulische Leitung 27 zu einem Zylinder 28, über den ein Arbeitsgerät 29, welches hier als kombinierte Köpf- und Rodeeinheit für die Rüben 8 ausgebildet ist, in seiner Wirkhöhe gesteuert wird. Der Zylinder 28 stützt sich andererseits am nicht dargestellten Rahmen der landwirtschaftlichen Maschine ab.

Jede der Ultraschalleinrichtungen 1 ist zur Abgabe von Signalen ausgebildet, die in ihrer Bandbreite und ihrer relativen Lage zueinander einstellbar sind. Jede Ultraschalleinrichtung 1 ist auf dem Rahmen der landwirtschaftlichen Maschine angeordnet, und zwar insbesondere in einer parallelen Horizontalebene. Jede Ultraschalleinrichtung 1 kann drei unterschiedliche Signale abgeben, und zwar entweder ein die Erhöhung des Arbeitsgerätes 29 verlangendes Signal, ein die Erniedrigung des Arbeitsgerätes 29 verlangendes Signal oder ein Zwischensignal, welches keine Veränderung der Wirkhöhe des Arbeitsgerätes 29 verlangt, sondern die gerade eingestellte Wirkhöhe konstant läßt.

Die Auswerteschaltung 10 ist vorzugsweise im Bereich des Fahrers in der Fahrerkabine der landwirtschaftlichen Maschine angeordnet. Der Fahrer kann hier manuell in die Auswerteschaltung eingreifen und dabei entweder das Arbeitsgerät 29 schnell anheben, schnell absenken oder auf automatisches Arbeiten umschalten. Zum schnellen Anheben werden die Wegeventile 12 und 15 aus der dargestellten Stellung in die jeweils andere Stellung überführt. Da die Pumpe 23 kontinuierlich angetrieben wird, wird damit der bestehende Rückfluß über das Wegeventil 12 unterbrochen bzw. geschlossen, und Hydraulikflüssigkeit gelangt durch das Wegeventil 15 zu dem Zylinder 28, so daß der Hebevorgang ausgesteuert wird. Das Überströmventil 18 ist auf einen Sicherheitsdruck eingestellt. Zum schnellen Absenken des Arbeitsgerätes 29 wird das Wegeventil 14 umgeschaltet, so daß Hydraulikflüssigkeit aus dem Zylinder 28 unmittelbar in den Tank 24 zurückströmen kann.

Zum Füllen des Druckspeichers 25 werden die Wegeventile 12 und 16 umgeschaltet, so daß die Pumpe 23 in den Druckspeicher 25 fördert. Ist der vorgesehene Maximaldruck von vielleicht 120 bar erreicht, schaltet der Druckschalter 26 die Wegeventile 12 und 16 wieder um.

Beim automatischen Arbeiten, also während des Köpf- und Rodevorgangs in einem Rübenfeld ist die Auswerteschaltung 10 auf Automatik gestellt, und über die Leitung 21 oder die Leitung 22 wird entweder das Wegeventil 13 betätigt, was zu einem langsamen Absenken des Arbeitsgerätes 29 führt. Umgekehrt führt die Umschaltung des Wegeventils 17 über die Leitung 22 zu einem langsamen Anheben des Arbeitsgerätes 29. Die beiden beschriebenen Vorgänge des Hebens oder Senkens innerhalb der automatischen Steuereinrichtung werden nun wie folgt in der Auswerteschaltung 10 festgelegt, und zwar in Abhängigkeit von den drei über die Ultraschalleinrichtungen 1 jeweils eingehenden Signale. Ist auch nur eines der drei Signal dergestalt, daß eine Erhöhung des Arbeitsgerätes 29 verlangt wird, dann wird ein entsprechendes Signal über die Leitung 22 zum Wegeventil 17 geleitet, so daß sich der im Druckspeicher 25 anstehende Druck im Zylinder 28 auswirken kann. Über das einstellbare Drosselventil 19 kann auf die Geschwindigkeit Einfluß genommen bzw. diese eingestellt werden. Über die Leitung 21 wird hingegen nur dann ein im Sinne einer Absenkung des Arbeitsgerätes 29 wirkendes Signal ausgesteuert, wenn aus jeder Ultraschalleinrichtung 1 ein die Absenkung verlangendes Signal vorliegt. Selbst dann, wenn zwei Ultraschalleinrichtungen 1 je im Bereich einer Pflegespur arbeiten, so daß dort eine größere Höhe vorgetäuscht wird, so führt dies zu keiner Änderung der Wirkhöhe. Erst wenn auch die dritte Ultraschalleinrichtung 1 ein die Erniedrigung der Wirkhöhe des Arbeitsgerätes 29 verlangendes Signal zusätzlich abgibt, ist dies ein Zeichen dafür, daß sich das Bodenprofil 6 tatsächlich abgesenkt hat und nicht etwa Pflegespuren vorliegen. Nur dann wird das Wegeventil 13 über die Leitung 21 angesteuert.

### BEZUGSZEICHENLISTE

- 1: - Ultraschalleinrichtung
- 2: - Sender
- 3: - Empfänger
- 4: - Reflexionsrohr
- 5: - Schallkeule
- 6: - Bodenprofil
- 7: - Pflegespur
- 8: - Rübe
- 9: - Leitung
- 10: - Auswerteschaltung
- 11: - Schaltung
- 12: - Wegeventil
- 13: - Wegeventil
- 14: - Wegeventil
- 15: - Wegeventil
- 16: - Wegeventil
- 17: - Wegeventil
- 18: - Überströmventil
- 19: - Drosselventil
- 20: - Drosselventil
- 21: - Leitung
- 22: - Leitung
- 23: - Pumpe
- 24: - Tank
- 25: - Druckspeicher
- 26: - Druckschalter
- 27: - Leitung
- 28: - Zylinder
- 29: - Arbeitsgerät

## Patentansprüche

1. Landwirtschaftliche Maschine, insbesondere Rübenerntemaschine, mit einer einen Sender (2) und einen Empfänger (3) aufweisenden Ultraschalleinrichtung (1) zur Bestimmung des Bodenabstandes, mit einer nachgeordneten Auswerteschaltung (10) für die gewonnenen Signale und einer Steuer- oder Regeleinrichtung (11, 28) zur Beeinflussung der Wirkhöhe eines Arbeitsgerätes (29), wobei mindestens zwei Ultraschalleinrichtungen (1) quer zur Fahrtrichtung versetzt vorgesehen sind, deren Signale gemeinsam bestimmend für die Steuer- oder Regeleinrichtung (11, 28)sind und die gleiche Grundeinstellung aufweisen, dadurch gekennzeichnet, daß die Auswerteschaltung (10) so abgestimmt ist, daß die Wirkhöhe des Arbeitsgerätes (29) nur dann erniedrigt wird, wenn alle Ultraschalleinrichtungen (1) je ein die Erniedrigung verlangendes Signal abgeben, während die Wirkhöhe des Arbeitsgerätes (29) bereits dann erhöht wird, wenn auch nur eine Ultraschalleinrichtung (1) ein die Erhöhung verlangendes Signal abgibt.

2. Landwirtschaftliche Maschine nach Anspruch 1, dadurch gekennzeichnet, daß jede Ultraschalleinrichtung (1) zur Abgabe eines die Erhöhung der Wirkhöhe verlangenden ersten Signals, eines die Erniedrigung der Wirkhöhe verlangenden zweiten Signals und eines die Wirkhöhe konstant haltenden dritten Signals ausgebildet ist.

3. Landwirtschaftliche Maschine nach Anspruch 1 oder 2, dadurch gekennzeichnet, daß alle Ultraschalleinrichtungen (1) in derselben, durch Laufräder festgelegten Horizontalebene angeordnet sind.

4. Landwirtschaftliche Maschine nach einem der Ansprüche 1 bis 3, dadurch gekennzeichnet, daß je eine Ultraschalleinrichtung (1) zwischen benachbarten Rübenreihen angeordnet ist.

5. Landwirtschaftliche Maschine nach einem oder mehreren der Ansprüche 1 bis 4, dadurch gekennzeichnet, daß drei oder mehr Ultraschalleinrichtungen (1) vorgesehen sind.

6. Landwirtschaftliche Maschine nach einem oder mehreren der Ansprüche 1 bis 5, dadurch gekennzeichnet, daß die Ultraschalleinrichtungen (1) rechtwinklig zur Fahrtrichtung ausgerichtet an der landwirtschaftlichen Maschine angeordnet sind.

7. Landwirtschaftliche Maschine nach Anspruch 1, dadurch gekennzeichnet, daß das Arbeitsgerät (29) ein- oder mehrreihig ausgebildet und senkrecht zu einer durch die Laufräder festgelegten Ebene geführt ist.

8. Landwirtschaftliche Maschine nach einem oder mehreren der Ansprüche 1 bis 7, dadurch gekennzeichnet, daß jede Ultraschalleinrichtung (1) von je einem Reflexionsrohr (4) umgeben ist, das auf die Bodenoberfläche ausgerichtet angeordnet ist.

9. Landwirtschaftliche Maschine nach einem oder mehreren der Ansprüche 1 bis 8, dadurch gekennzeichnet, daß die Steuer- oder Regeleinrichtung (11, 28) eine eine Mehrzahl von Wegeventilen (12, 13, 14, 15, 16, 17) aufweisende hydraulische Schaltung (11) aufweist, die einerseits zum schnellen Heben und Senken und andererseits zum vergleichsweise langsamen automatischen Anpassen dar Wirkhöhe ausgebildet ist.

10. Landwirtschaftliche Maschine nach Anspruch 2, dadurch gekennzeichnet, daß der Bereich des Auftretens des dritten Signals an allen Ultraschalleinrichtungen (1) gemeinsam festlegbar und gemeinsam verstellbar ist.

## Claims

1. An agricultural machine, in particular beet harvester, comprising an ultrasonic device (1) for detecting the distance to the ground and having an ultrasonic generator (2) and an ultrasonic receiver (3), a downstream positioned evaluation circuit (10) for the signals received, and a controlling means (11, 28) to influence the working height of a working unit (29), whereby at least two ultrasonic devices (1) are positioned crosswise to the driving direction of the agricultural machine, the signals of which determine the controlling means (11, 28) and which have the same general adjustment, **wherein** the evaluation circuit (10) is tuned so that the working height of the working unit (29) is lowered only in case all of the ultrasonic devices (1) emit a signal each demanding for a lowering, while the working height of the working unit (29) is increased if at least one ultrasonic device emits a signal demanding a lifting.

2. The agricultural machine of claim 1, **wherein** each ultrasonic device (1) is designed to emit a first signal demanding an increase of the working height, a second signal demanding a decrease of the working height, and a third signal demanding the working height remaining constant.

3. The agricultural machine of claim 1 or 2, **wherein** all of the ultrasonic devices (1) are located within the same horizontal plane determined by running wheels.

4. The agricultural machine of one of the claims 1 to 3, **wherein** between two adjacent beet rows there is provided one ultrasonic device (1) each.

5. The agricultural machine of one of the claims 1 to 4, **wherein** three or more ultrasonic devices (1) are provided.

6. The agricultural machine of one of the claims 1 to 5, **wherein** the ultrasonic devices (1) are located on the agricultural machine at right angle with respect to the driving direction.

7. The agricultural machine of claim 1, **wherein** the working unit (29) is designed to handle one or more rows and is guided vertically perpendicular to a plane determined by the running wheels.

8. The agricultural machine of one of the claims 1 to 7, **wherein** each of the ultrasonic devices (1) is surrounded by a reflection tube (4), directed to the surface of the ground.

9. The agricultural machine of one of the claims 1 to 8, **wherein** the controlling means (11, 28) comprises a hydraulic circuit (11) having a number of solenoid valves (12, 13, 14, 15, 16, 17) and being designed for quick lifting or lowering on the one hand and for comparatively slower automatic processing of the working height on the other hand.

10. The agricultural machine of claim 2, **wherein** the range of the emission of the third signal of all of the ultrasonic devices (1) is commonly defined and may be commonly adjusted.

## Revendications

1. Machine agricole, en particulier récolteuse de betteraves, avec un dispositif à ultrasons (1), comportant un émetteur (2) et un récepteur (3), pour la détermination de la distance au sol, avec un circuit d'exploitation (10) situé en aval pour les signaux obtenus et un dispositif de commande ou de régulation (11, 28) destiné à influencer la hauteur d'action d'un dispositif de travail (29), dans laquelle au moins deux dispositifs à ultrasons (1) sont prévus décalés transversalement à la direction de marche, dont les signaux sont déterminants conjointement pour le dispositif de commande ou de régulation (11, 28) et présentent le même réglage de base, caractérisée en ce que le circuit d'exploitation (10) est accordé de manière que la hauteur d'action du dispositif de travail (29) ne soit abaissée que lorsque tous les dispositifs à ultrasons (1) délivrent chacun le signal exigeant l'abaissement, tandis que la hauteur d'action du dispositif de travail (29) est augmentée même lorsque seulement un dispositif à ultrasons (1) délivre un signal exigeant l'augmentation.

2. Machine agricole selon la revendication 1, caractérisée en ce que chaque dispositif à ultrasons (1) est conçu pour délivrer un premier signal exigeant l'augmentation de la hauteur d'action, un deuxième signal exigeant l'abaissement de la hauteur d'action et un troisième signal maintenant constante la hauteur d'action.

3. Machine agricole selon la revendication 1 ou 2, caractérisée en ce que tous les dispositifs à ultrasons (1) sont disposés dans le même plan horizontal défini par des roues de roulement.

4. Machine agricole sel on l'une des revendications 1 à 3, caractérisée en ce que chaque dispositif à ultrasons (1) est placé entre deux rangées de betteraves voisines.

5. Machine agricole selon une ou plusieurs des revendications 1 à 4, caractérisée en ce qu'il est prévu trois dispositifs à ultrasons (1) ou plus.

6. Machine agricole selon une ou plusieurs des revendication 1 à 5, caractérisée en ce que les dispositifs à ultrasons (1) sont orientés perpendiculairement à la direction de marche et placés sur la machine agricole.

7. Machine agricole selon la revendication 1, caractérisée en ce que le dispositif de travail (29) est à une ou plusieurs rangées et est guidé perpendiculairement à un plan défini par les roues de roulement.

8. Machine agricole selon une ou plusieurs des revendications 1 à 7, caractérisée en ce que chaque dispositif à ultrasons (1) est entouré par un tube de réflexion (4), qui est orienté vers la surface du sol.

9. Machine agricole selon une ou plusieurs des revendications 1 à 8, caractérisée en ce que le dispositif de commande ou de régulation (11, 28) comporte un circuit hydraulique (11) présentant une pluralité de vannes de distribution (12, 13, 14, 15, 16, 17), qui est conçu d'une part pour le relèvement et l'abaissement rapides et d'autre part pour l'adaptation automatique relativement lente de la hauteur d'action.

10. Machine agricole selon la revendication 2, caractérisée en ce que le domaine d'apparition du troisième signal sur tous les dispositifs à ultrasons (1) peut être défini conjointement et réglé conjointement.
